# EUROPÄISCHE PATENTANMELDUNG

(11) **EP 2 068 132 A1**
(43) Veröffentlichungstag der Anmeldung: **10.06.2009**
(21) Anmeldenummer: 08168768.3
(22) Anmeldetag: 10.11.2008
(51) Int. Cl.: G01F 19/00, A47J 31/44

(54) **Dosierlöffel**

(30) Priorität: 06.12.2007 DE 202007017058 U
(71) Anmelder: MELITTA HAUSHALTSPRODUKTE GmbH & Co. Kommanditgesellschaft, D-32427 Minden (DE)
(72) Erfinder: Weinreich, Steffen, 32427, Minden (DE); Werner, Andre, 32469, Petershagen (DE)
(74) Vertreter: Dantz, Jan Henning

(57) **Zusammenfassung**

Ein Dosierlöffel (1), insbesondere zur Dosierung von Kaffeemehl, mit einem an einem Griff (2) angeordneten Behälter (3), der mindestens zwei verschwenkbare Behälterwände (7) aufweist, wobei der Behälter (3) nach oben zum Einfüllen offen ausgebildet ist, und durch Verschwenken der Behälterwände (7) an einer Unterseite eine Ausgabeöffnung erzeugbar ist. Dadurch kann mittels dem Dosierlöffel (1) ein zu dosierendes Material, wie Kaffeemehl auf einfache Weise in den Behälter (3) von oben eingefüllt werden.

## Beschreibung

Die vorliegende Erfindung betrifft einen Dosierlöffel, insbesondere zur Dosierung von Kaffeemehl, mit einem an einem Griff angeordneten Behälter, der mindestens zwei verschwenkbare Behälterwände aufweist.

Ein herkömmlicher Kaffeelöffel umfasst einen Griff und einen Löffelabschnitt, der auch zur Befüllung von Filtern eingesetzt werden kann. Allerdings besteht das Problem, dass beim Befüllen von Filtern, insbesondere von Filtern für Einzeltassenportionen der Befüllungsvorgang mit ruhiger Hand ausgeführt werden muss und das zu befüllende Material beim Drehen des Kaffeelöffels leicht verschüttet werden kann.

Es ist das sogenannte Tee-Ei bekannt, bei dem eine aus zwei Schalen gebildeter Behälter am Ende des Griffes angeordnet ist. Durch Drücken des Griffes können die Schalen geöffnet werden, um die gewünschte Menge an Tee oder einem anderen Material in den Behälter zu füllen. Der Nachteil bei dem Tee-Ei liegt darin, dass dieses während des Brühvorganges in dem Fluid verbleibt und nicht zur Dosierung und zum Befüllen von Filtern einsetzbar ist.

Es ist daher Aufgabe der vorliegenden Erfindung einen Dosierlöffel zu schaffen, der ein einfaches Befüllen von Filtern ermöglicht.

Diese Aufgabe wird mit einem Dosierlöffel mit den Merkmalen des Anspruches 1 gelöst.

Erfindungsgemäß weist der Dosierlöffel einen nach oben offenen Behälter auf, der durch Verschwenken der Behälterwände an einer Unterseite eine Ausgabeöffnung erzeugen kann. Dadurch kann mittels dem Dosierlöffel ein zu dosierendes Material, wie Kaffeemehl auf einfache Weise in den Behälter von oben eingefüllt oder eingeschaufelt werden, wobei zur positionsgenauen Dosierung der Dosierlöffel über den Filter oder zu befüllenden Gegenstand gehalten wird und dort durch Verschwenken der Behälterwände eine Dosierung exakt erfolgen kann. Dadurch entfällt das Drehen des gesamten Dosierlöffels und es lassen sich insbesondere auch kleinere Filter, wie für Portionspackungen gut befüllen, ohne dass das zu befüllende Material daneben verschüttet wird.

Vorzugsweise sind die Behälterwände über ein Scharnierelement verschwenkbar aneinander gehalten, mittels dem die Behälterwände federnd in ihre Ausgangposition zurück bewegbar sind. Durch die Rückstellkräfte des Scharnierelementes wird die Ausgabeöffnung nach der Befüllung dann wieder verschlossen und der Dosierlöffel kann neu befüllt werden. Die Rückstellkräfte können durch die elastische Ausbildung des Scharnierelementes, eines Filmscharnieres oder anderer Federelemente erhalten werden.

Gemäß einer bevorzugten Ausgestaltung der Erfindung weist der Griff zwei Stege auf, die über mindestens einen biegbaren Arm zur Ausbildung einer Schwenkachse miteinander verbunden sind. Dadurch kann durch Zusammendrücken der Stege der Behälter durch Verschwenken der Behälterwände geöffnet werden. Hierfür ist jeder Steg vorzugsweise mit einer Behälterwand verbunden, so dass eine Biegung in einer Schwenkbewegung resultiert.

Für eine genaue Befüllung kann der aus den Behälterwänden gebildete Behälter im Wesentlichen trichterförmig ausgebildet sein, so dass das zu befüllende Material an einer vorbestimmten Stelle an der Unterseite austreten kann.

Um den Schwenkweg der Behälterwände zu begrenzen, kann ein Anschlag vorgesehen sein. Dieser kann beispielsweise durch eine Aussparung im Bereich einer Trennebene der Behälterwände gebildet sein.

Vorzugsweise steht mindestens ein biegbarer Arm an den Stegen des Griffes nach unten hervor und ist benachbart zu dem Behälter angeordnet. Dadurch wird gewährleistet, dass bei einem Zusammendrücken der Stege diese um eine unterhalb der Stege gebildete Schwenkachse verdreht werden, um dann die Behälterwände durch eine Schwenkbewegung zu öffnen. Für eine Abstützung der Stege können auch mehrere biegbare Arme zwischen den Stegen angeordnet sein.

Um die Handhabung des Dosierlöffels zu vereinfachen, können an den Stegen des Griffes ein oder mehrere hervorstehende Grifflaschen vorgesehen sein. Dadurch wird auch eine definierte Schwenkbewegung erreicht, da der Kraftangriffspunkt vorgegeben wird. Die Grifflaschen können dabei an der Oberkante der Behälterwände und/oder der Stege angeformt sein.

Für eine einfache Herstellung des Dosierlöffels kann dieser einstückig aus Kunststoff hergestellt sein.

Um die Dosierung auch hinsichtlich der Füllmenge exakt vornehmen zu können, sind in dem Behälter vorzugsweise ein oder mehrere Markierungen zur Anzeige der Füllmenge vorgesehen.

Die Erfindung wird nachfolgend anhand eines Ausführungsbeispieles mit Bezug auf die beigefügten Zeichnungen näher erläutert. Es zeigen:

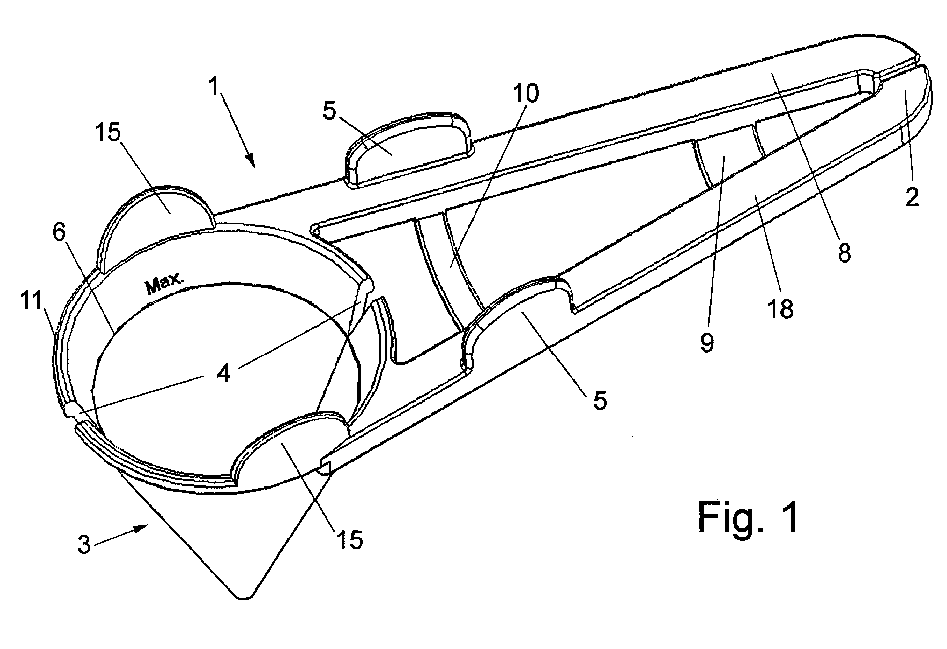

- Figur 1: eine perspektivische Darstellung eines erfindungsgemäßem Dosierlöffels;

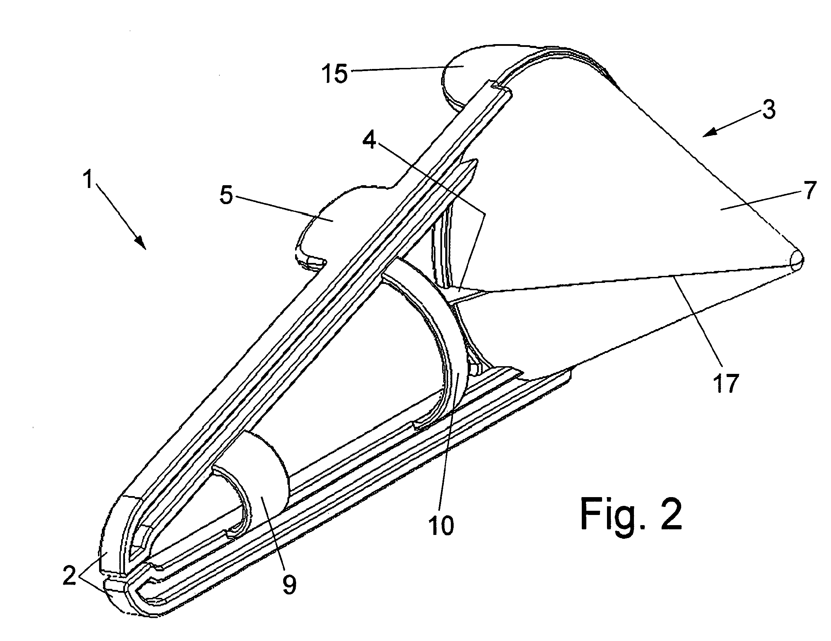

- Figur 2: Eine perspektivische Darstellung des Dosierlöffels der Figur 1 von unten, und
- Figur 3: eine seitliche Ansicht des Dosierlöffels während eines Befüllvorganges.

Ein Dosierlöffel 1, insbesondere zum Einfüllen von Kaffeemehl, umfasst einen Griff 2, der aus zwei beabstandeten Stegen 8 und 18 gebildet ist, sowie einen endseitig angeordneten Behälter 3. Der Behälter 3 ist trichterförmig ausgebildet und umfasst zwei Behälterwände 7, die entlang einer Trennebene 17 geteilt sind. Im Bereich der Trennungsebene 17 ist benachbart zu einem oberen Rand 11 eine V-förmige Aussparung 4 an gegenüberliegenden Seiten der Behälterwände 7 vorgesehen, die einen Anschlag ausbilden.

Zum Verschwenken der Behälterwände 7 ist jeder Steg 8 bzw. 18 mit einer Behälterwand 7 verbunden, wobei an jedem Steg 8 bzw. 18 eine nach oben hervorstehende Grifflasche 5 angeformt ist. Ferner sind an jeder Behälterwand 7 am oberen Randbereich eine weitere Grifflasche 15 angeformt.

Die V-förmig angeordneten Stege 8 und 18 des Griffes 2 sind über nach unten gebogene Arme 9 und 10 miteinander verbunden, wobei der Arm 10 benachbart zu dem trichterförmigen Behälter 3 angeordnet ist.

In dem Behälter 3 sind ein oder mehrere Markierungen 6 vorgesehen, mittels denen der Benutzer die Füllmenge angezeigt bekommt.

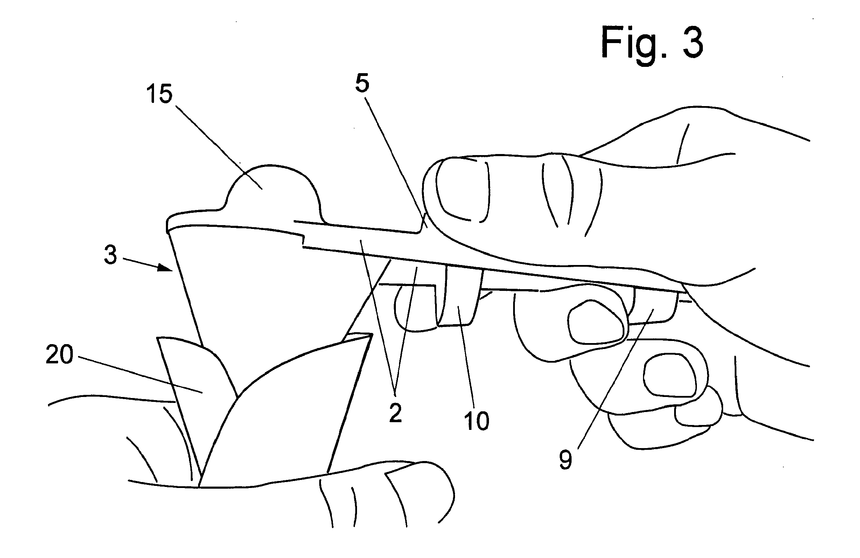

Der Dosierlöffel 1 wird entsprechend Figur 3 vorzugsweise zum Befüllen von Filtern 20 für Portionspackungen verwendet. Hierfür wird der Dosierlöffel 1 zunächst in einen Vorratsbehälter mit Kaffeemehl eingetaucht und dann die gewünschte Füllmenge eingeschaufelt. Anschließend kann der Benutzer an den Grifflaschen 5 oder 15 drücken, so dass die Stege 8 und 18 aufgrund der biegbaren Arme 9 und 10 zueinander gedreht und verschwenkt werden, was den Behälter 3 an der Unterseite öffnet, da die Behälterwände 7 verschwenkt werden, bis die Behälterwände 7 an dem Anschlag 4 anliegen. Der Anschlag 4 begrenzt die Öffnung der Behälterwände 7, so dass der Filter 20 beim Einfüllen von Kaffeemehl nicht beschädigt wird. Nach dem Füllvorgang können die Laschen 5 bzw. 15 wieder freigegeben werden, so dass der Behälter 3 sich schließt.

Im dargestellten Ausführungsbeispiel sind zwei biegbare Arme 9 und 10 zum Verbinden der Stege 8 und 18 vorgesehen. Die Stege 8 und 18 sind dabei an einem oberen Rand 11 des Behälters 3 angebracht. Es ist natürlich auch möglich, nur einen biegbaren Arm, ein Filmscharnier oder eine andere Mechanik einzusetzen, um ein Verschwenken der Behälterwände 7 zu realisieren. Zudem kann zum Rückstellen der Behälterwände in die Ausgangsposition auch ein Federelement vorgesehen werden.

Der Dosierlöffel 1 ist einteilig aus Kunststoff hergestellt. Es ist auch möglich, den Dosierlöffel 1 aus mehreren Bauteilen zusammenzusetzen.

## Patentansprüche

1. Dosierlöffel (1), insbesondere zur Dosierung von Kaffeemehl, mit einem an einem Griff (2) angeordneten Behälter (3), der mindestens zwei verschwenkbare Behälterwände (7) aufweist, **dadurch gekennzeichnet, dass** der Behälter (3) nach oben zum Einfüllen offen ausgebildet ist, und durch Verschwenken der Behälterwände (7) an einer Unterseite eine Ausgabeöffnung erzeugbar ist.

2. Dosierlöffel nach Anspruch 1, **dadurch gekennzeichnet, dass** die Behälterwände (7) über ein Scharnierelement verschwenkbar aneinander gehalten sind, mittels dem die Behälterwände (7) federnd in ihre Ausgangposition zurück bewegbar sind.

3. Dosierlöffel nach Anspruch 2, **dadurch gekennzeichnet, dass** der Griff (2) zwei Stege (8, 18) aufweist, die über mindestens einen biegbaren Arm (9, 10) miteinander verbunden sind.

4. Dosierlöffel nach Anspruch 3, **dadurch gekennzeichnet, dass** jeder Steg (8, 18) mit einer Behälterwand (7) verbunden ist und die Stege (8, 18) relativ zueinander bewegbar sind.

5. Dosierlöffel nach einem der Ansprüche 1 bis 4, **dadurch gekennzeichnet, dass** der aus den Behälterwänden (7) gebildete Behälter (3) im wesentlichen trichterförmig ist.

6. Dosierlöffel nach einem der Ansprüche 1 bis 5, **dadurch gekennzeichnet, dass** der Schwenkweg der Behälterwände (7) relativ zueinander durch einen Anschlag (4) begrenzt ist.

7. Dosierlöffel nach einem der Ansprüche 1 bis 6, **dadurch gekennzeichnet, dass** mindestens ein biegbarer Arm (9, 10) an den Stegen (8, 18) des Griffes nach unten hervorsteht und benachbart zu dem Behälter (3) angeordnet ist.

8. Dosierlöffel nach einem der Ansprüche 3 bis 7, **dadurch gekennzeichnet, dass** an den Stegen (8, 18) des Griffes (2) mindestens eine hervorstehende Grifflasche (5, 15) zum Verschwenken der Behälterwände (7) vorgesehen ist.

9. Dosierlöffel nach Anspruch 8, **dadurch gekennzeichnet, dass** Grifflaschen (5, 15) an einer Oberkante der Behälterwände (7) und/oder der Stege (8, 18) angeformt sind.

10. Dosierlöffel nach einem der Ansprüche 1 bis 9, **dadurch gekennzeichnet, dass** in der Dosierlöffel (1) einstückig aus Kunststoff hergestellt ist.

11. Dosierlöffel nach einem der Ansprüche 1 bis 10, **dadurch gekennzeichnet, dass** in dem Behälter (3) mindestens eine Markierung (6), insbesondere zur Anzeige einer Füllmenge, vorgesehen ist.
